# FASCICULE DE BREVET EUROPEEN

(11) **EP 0 732 872 B1**
(45) Date de publication et mention de la délivrance du brevet: **22.07.1998**
(21) Numéro de dépôt: 95933469.9
(22) Date de dépôt: 03.10.1995
(51) Int. Cl.: A01N 25/00, A47L 7/00, A47L 9/14

(54) **COMPLEXE INSECTICIDE ET PARASITICIDE, ET PROCEDE DE DESINSECTISATION ET DE DESTRUCTION DES ECTOPARASITES**
INSEKTICIDE UND PARASITICIDE KOMBINATION UND VERFAHREN ZUR BEKäMPFUNG VON INSEKTEN UND EKTOPARASITEN
INSECTICIDAL AND PESTICIDAL COMPLEX, AND METHOD FOR DESTROYING INSECTS AND ECTOPARASITES

(30) Priorité: 10.10.1994 FR 9412318
(43) Date de publication de la demande: 25.09.1996
(73) Titulaire: Attali, Jean-Claude, 13260 Cassis (FR); Vuagnoux, Jean-Claude, 13390 Auriol (FR)
(72) Inventeur: Attali, Jean-Claude, 13260 Cassis (FR); Vuagnoux, Jean-Claude, 13390 Auriol (FR)
(74) Mandataire: Somnier, Jean-Louis
(86) Numéro de dépôt international: FR9501279
(87) Numéro de publication internationale: WO9610909

(56) Documents cités:
- EP-A- 0 466 986
- GB-A- 2 110 524
- PATENT ABSTRACTS OF JAPAN vol. 940 no. 010 & JP,A,62 077168 (SAITO HACHIRO) 4 Octobre 1994,
- PATENT ABSTRACTS OF JAPAN vol. 016 no. 148 (C-928) ,13 Avril 1992 & JP,A,40 005942 (FUJITA SANAI) 24 Avril 1990,
- DATABASE WPI Week 9222 Derwent Publications Ltd., London, GB; AN 92-180839 [22] & JP,A,04 120 002 (EARTH SEIYAKU) , 21 Avril 1992
- CHEMICAL ABSTRACTS, vol. 101, no. 17, 22 Octobre 1984 Columbus, Ohio, US; abstract no. 149601, W.F.GREEN 'Abolition of allergens by tannic acid'
- K.NAUMANN 'Chemistry of Plant Protection, Vol. 4 Synthetic Pyrethroid Insecticides: Structures and Properties' 1990 , SPRINGER , BERLIN, DE 3.4 Factors Enhancing the Action of Pyrethroids Against Insects, page 109-111 voir page 110, alinéa 6
- DATABASE WPI Week 9138 Derwent Publications Ltd., London, GB; AN 91-278132 [38] & JP,A,03 184 552 (SUN SEAL) , 12 Août 1991
- PATENT ABSTRACTS OF JAPAN vol. 015 no. 478 (C-891) ,4 Décembre 1991 & JP,A,32 006834 (AZUMI ROSHI) 10 Septembre 1991,
- DATABASE WPI Week 8847 Derwent Publications Ltd., London, GB; AN 88-335215 [47] & JP,A,63 249 532 (EARTH SEIYAKU) , 17 Octobre 1988
- PATENT ABSTRACTS OF JAPAN vol. 13 no. 182 (C-591) ,27 Avril 1989 & JP,A,10 010939 (TERAKADO MIYOKO) 13 Janvier 1989,
- PATENT ABSTRACTS OF JAPAN vol. 15 no. 440 (C-883) ,14 Août 1991 & JP,A,31 086241 (MATSUSHITA ELECTRIC IND) 14 Août 1991,

## Description

La présente invention concerne un complexe insecticide et parasiticide. Elle vise également un procédé de destruction des insectes et/ou ectoparasites proliférant dans des espaces divers tels que locaux à usage d'habitation ou autre, meubles, véhicules de toute nature, etc.

On sait, par exemple, que dans une maison même parfaitement entretenue, la poussière qui s'y trouve contient de très nombreux parasites microscopiques tels que les acariens des poussières, premiers responsables des allergies respiratoires et oculaires. Ces ectoparasites se développent et abondent dans les literies, matelas, tissus d'ameublement, moquettes, placards à vêtements, coussins des canapés, rideaux, et aussi dans les interstices des sols et des plinthes.

Ces acariens, morts ou vivants, ainsi que leurs déjections, constituent des allergènes sensibilisants pour notre appareil respiratoire. Ils provoquent ainsi l'apparition d'un très grand nombre d'affections allergiques respiratoires (asthme, rhinites, toux spasmodiques, chez les enfants et les adultes), ainsi que des conjonctivites allergiques.

Par ailleurs, d'autres types d'ectoparasites et d'insectes (puces, tiques, poux, araignées, mouches, moustiques, cafards, blattes, etc.) peuvent se trouver, à différents stades de reproduction ou d'évolution (larves, oeufs, adultes), dans les tapis, moquettes, interstices de parquet, fibres de tissu d'ammeublement, etc., et constituent, eux aussi, des causes de nombreuses affections et manifestations allergiques (allergies dermatologiques dues à l'inoculation de la salive de la puce par piqûre, pyroplasmose provoquée par les tiques, paludisme transmis par l'anophèle femelle, etc.).

La destruction de ces insectes et de ces parasites dans une habitation est une tâche domestique importante nécessitant à la fois de tuer ces insectes et ces parasites et d'empêcher leur reproduction et leur propagation dans l'habitation.

Dans ce but, on est conduit à utiliser plusieurs produits à la fois, chaque produit étant spécifique à certains types d'insectes et de parasites (rampants, volants, etc.). Selon leur destination, ces produits sont conditionnés sous forme de plaques, plaquettes, poudres, etc., à déposer aux endroits supposés les plus exposés ou les mieux appropriés de l'habitation, ou sous forme de produits à pulvériser dans les diverses pièces. Le procédé le plus usité, pour couvrir la plus grande superficie en produits anti-parasites et insecticides, consiste à pulvériser ces produits (disponibles dans le commerce sous forme d'aérosols à pulvériser) directement dans les pièces à protéger et à assainir.

Toutefois, ce procédé "d'assainissement" peut entraîner au moins les inconvénients suivants :
- le produit pulvérisé ne se disperse pas uniformément dans toute la pièce, de sorte que la protection n'est assurée qu'aux endroits où le produit s'est déposé ;
- le produit, en se déposant sur les meubles, peut les tacher ;
- les aérosols liquides domestiques ou industriels, à pulvériser ou à nébuliser nécessitent des précautions d'emploi (contact avec les muqueuses à éviter, etc.) ;
- les aérosols antiparasitaires ou insecticides sont souvent spécifiques à un seul type ou à une seule catégorie d'insectes ou de parasites, et il est nécessaire d'utiliser différents aérosols à la fois pour parvenir à la destruction de tous les insectes et parasites ;
- Le produit utilisé dans les aérosols permet de tuer certains parasites sans supprimer l'effet allergisant toujours présent et actif, généré par leurs cadavres.

En outre, la mise en oeuvre des différents produits et procédés connus de désinsectisation et de "déparasitage" ne supprime pas l'obligation quotidienne de nettoyer les sols et d'utiliser un aspirateur pour l'élimination des poussières, des salissures, voire des ectoparasites et des insectes, qui se trouvent dans les moquettes, les tapis, les tissus d'ameublement, ou dans les recoins inaccessibles des habitations (corniches, plinthes) ou du mobilier (tiroirs, fond des meubles)

Il est bien connu que lors du passage de l'aspirateur, l'air refoulé peut contenir des parasites que la porosité du sac filtre à poussière ne peut arrêter, en permettant ainsi leur nouvelle propagation. Par ailleurs, le sac à poussière de l'aspirateur n'est changé que lorsqu'il est rempli, soit toutes les deux ou trois semaines environ, et, pendant ce temps, l'aspirateur est rangé dans une zone de l'habitation (placard, penderie), où il va constituer un point de départ à la réinfestation de l'habitation, en particulier par les acariens qui proliféreront dans des conditions idéales (poussières et température) à partir dudit sac, et migreront ensuite à l'extérieur de celui-ci, vers des zones nouvelles (vêtements, tissus, moquettes).

On connaît, pour tenter de répondre au problème de réinfestation ci-dessus, une méthode "insecticide et stérilisante" telle que décrite dans la demande de brevet JP/A/ 6277168, qui décrit un agent granulaire logé dans le tube collecteur d'un aspirateur et imprégné avec au moins un élément actif (parfum, déodorant, stérilisant, insecticide, etc) : cependant, un tel procédé n'est ni bactéricide, ni fongicide et donc non parasiticide, et d'autre part il a comme inconvénient majeur le fait que l'agent granulaire est logé dans le tube collecteur, pouvant ainsi être entraîné par le flux d'air et risquant alors de colmater le filtre toujours disposé entre le tube collecteur et le sac du filtre à poussière.

On connaît par ailleurs un dispositif "antimite", décrit dans la demande de brevet JP 4005943 qui est obtenu par addition, sur de la poudre d'os d'animaux, de liant (bentonite) et d'alumine que l'on transforme ensuite en boulettes de diamètre compris entre 15 et 25 mm : ces boulettes sont ensuite et entre autres immergées dans une solution de dioxyde de chlore, qui est un produit dangereux pour l'homme puisqu'il utilise du chlore sous forme de gaz.

Un objet de l'invention est donc de remédier aux inconvénients des produits et procédés actuellement utilisés dans les habitations et autres locaux et qui sont soit parasiticides soit insecticides soit antimites soit stérilisants mais jamais tout cela à la fois, et avec des mises en oeuvre ne permettant pas d'atteindre l'objectif recherché dans de bonnes conditions.

Selon l'invention ce but est atteint grâce à un complexe parasiticide et insecticide remarquable par les deux caractéristiques suivantes :
- d'une part par le fait que son produit actif est combiné à un moyen autorisant son introduction et diffusion à l'intérieur du sac filtre à poussière d'un aspirateur, et en ce que ce moyen a une conformation ou une grosseur telle qu'elle s'oppose au colmatage de la paroi perméable dudit sac par ledit produit actif, et/ou par ledit moyen, en cours d'utilisation de l'aspirateur ;
- d'autre part, par la composition dudit principe actif qui comprend principalement :
   - un mélange d'agents anti-parasitaires et insecticides de préférence constitués, au moins pour certains d'entre eux, par des pyréthrinoïdes ;
   - un analogue d'hormone de croissance ;
   - un agent neutralisant modifiant les structures protéiniques constituant les enveloppes des corps des parasites.

Selon le procédé de l'invention, le complexe insecticide et parasiticide susmentionné est introduit dans le sac filtre à poussière d'un aspirateur, avant l'utilisation de ce dernier dans toutes les pièces et/ou sur tous les meubles ou mobiliers, susceptibles de contenir, de loger, d'abriter des acariens ou tous types d'insectes ou parasites nuisibles.

On comprend que, lors du passage de l'aspirateur, la force de l'aspiration déloge les insectes et les parasites, les entraîne dans le sac filtre à poussière de l'aspirateur où ils sont tués par l'effet du produit insecticide et parasiticide qui a été préalablement déposé à l'intérieur dudit sac. L'air qui ressort de l'aspirateur en aval du sac filtre à poussière, est débarrassé des poussières recueillies dans le sac et ne contient plus également de parasites ou d'insectes vivants ou morts. Ceci évite une nouvelle propagation des parasites dans les pièces d'habitation ou autres lieux, par la circulation de l'air provenant de l'aspirateur. En outre, la présence dudit produit dans le sac filtre à poussière permet d'éviter la multiplication et la croissance des parasites et insectes, à l'intérieur dudit sac.

Le complexe et le procédé insecticides et parasiticides selon l'invention procurent plusieurs avantages :
- ils sont faciles et rapides à mettre en oeuvre ;
- ils n'entraînent pas la détérioration du produit insecticide et parasiticide photosensible qui est maintenu à l'abri de la lumière ;
- ils permettent d'éviter tout contact direct du produit avec le mobilier et/ou avec la personne qui manipule l'aspirateur ;
- ils ne provoquent aucune propagation ou pollution des parasites lors du rejet de l'air de l'aspirateur ;
- ils empêchent la multiplication des parasites et des insectes aspirés, présents dans le sac ;
- ils permettent de traiter toute la surface d'une pièce d'habitation ou autre local en une seule manipulation ;
- ils causent la destruction des parasites, en ôtant également leur caractère allergène.

En outre, grâce à la mise en oeuvre du produit et du procédé de désinsectisation et de déparasitage de l'invention, l'aspirateur à poussière traditionnel n'est plus réservé à la fonction d'aspiration des poussières et détritus, mais devient un instrument très efficace et très rationnel de déparasitage et de désinsectisation.

Les buts, caractéristiques et avantages ci-dessus, et d'autres encore, ressortiront mieux de la description qui suit.

Le produit insecticide et parasiticide, selon l'invention comprend :
1. un produit insecticide et parasiticide ;
2. un moyen autorisant l'introduction et la diffusion de ce produit dans le sac filtre à poussière d'un aspirateur et s'opposant au colmatage de la paroi perméable dudit sac.

De manière très avantageuse, le produit insecticide et parasiticide nouveau utilisé pour la mise en oeuvre du complexe et du procédé selon l'invention comprend principalement :
- 1,) un mélange d'agents anti-parasitaires et insecticides ;
- 2,) un analogue d'hormone de croissance ;
- 3,) un agent neutralisant.

De manière très intéressante, ce produit comprend les composants ci-après :
- 1,) des pyréthrinoïdes, de préférence constitués par :
   - a) la tétraméthrine ou la perméthrine
   - b) la cyperméthrine ;
- 2,) un synergiste tel que le piperonyl butoxide ;
- 3,) un analogue d'hormone de croissance, tel que : ovoprène, ou méthroprène, ou Ferroxycarb, ou tout autre analogue d'hormone juvénile ;
- 4,) un agent neutralisant, tel que du tanin, par exemple,
- 5,) un excipient parfumé.

L'association de la tétraméthrine et de la cyperméthrine, aux spectres insecticides complémentaires constitue un redoutable produit de destruction de parasites et d'insectes, avec un pouvoir de rémanence très important de plusieurs semaines.

Cette action est, de plus, synergisée par le Butoxide de piperonyl.

L'ovoprène se fixe sur le site de fixation de l'hormone de croissance, empêchant cette dernière de jouer son rôle. Cet analogue d'hormone de croissance va entraîner la désorganisation profonde des systèmes de synthèse et de croissance des parasites et des insectes, en bloquant, en particulier, la croissance et le développement normal des oeufs et des larves qui ont été aspirés dans le sac de l'aspirateur, ce qui rend ainsi impossible l'accomplissement normal et naturel du cycle de reproduction et de métamorphose.

L'agent neutralisant constitué par le tanin va agir en modifiant les structures protéiniques constituant les enveloppes et les corps des parasites acariens, en neutralisant ces allergènes et en supprimant ainsi l'origine des allergies provoquées par les corps, même morts, des parasites aspirés.

Le produit insecticide et parasiticide contient, par exemple, les proportions ci-après des composants susmentionnés :
- pyréthrinoïdes (tétraméthrine, perméthrine, cyperméthrine)
   0,5 à 2 %
- synergiste (piperonyl butoxide)
   2 à 4 %
- analogue d'hormone de croissance (ovoprène)
   0,1 à 0,2 %
- agent neutralisant (tanin)
   0,4 à 1 %
   q.s.p. 100 g ou 100 ml

Le produit insecticide et parasiticide formulé de la manière précédemment indiquée, est plus spécialement conçu pour avoir une action efficace vis-à-vis d'une grande variété d'insectes et de parasites, dans un espace clos dans lequel il est destiné à être confiné avec les insectes et parasites aspirés.

Le produit insecticide et parasiticide selon l'invention peut être présenté sous différentes formes :liquide, pulvérulente ou solide, et le moyen ou véhicule permettant l'introduction et la diffusion de ce produit à l'intérieur du sac filtre à poussière d'un aspirateur, diffère suivant la présentation dudit produit.

Lorsqu'il se présente sous forme de poudre, le produit insecticide et parasiticide peut, par exemple, être renfermé dans un sachet perméable.

Toutefois, selon un mode d'exécution très avantageux du complexe insecticide et parasiticide selon l'invention, les moyens permettant d'éviter le colmatage des parois perméables du sac filtre à poussière de l'aspirateur, sont constitués par des particules ou grains de matière solide inerte (sable, billes de verre, charbon, liège, etc.), de granulométrie convenable et mélangés à la poudre insecticide et parasiticide. Ces grains ou particules ont, par exemple, un diamètre de l'ordre de 1 mm ou plus.

Grâce à cette constitution du complexe, on obtient un brassage permanent de la poudre insecticide sous l'effet de l'agitation des particules ou grains créée par le courant d'air résultant de l'aspiration. On évite ainsi le colmatage des parois perméables du sac filtre de l'aspirateur. D'autre part, on obtient aussi un contact très intime entre les principes actifs de la poudre insecticide et parasiticide et les insectes et/ou les parasites recueillis avec la poussière, ce qui ne peut qu'accroître l'efficacité desdits produits actifs.

Lorsqu'il se présente sous une forme liquide, par exemple sous forme de solution, celle-ci peut être contenue dans des réceptables de formes variées et de dimensions réduites et agencés de façon à permettre l'évaporation lente du produit, par exemple : sticks, éponges, etc., lesquels constituent différents types de moyens ou véhicules permettant l'introduction et la diffusion du produit insecticide à l'intérieur du filtre à poussière, et permettant d'éviter le colmatage de la paroi perméable de ce dernier.

A titre d'exemple non limitatif, il peut s'agir d'un réservoir de petite dimension, exécuté en PVC, dans lequel plonge une mêche, qui permet la diffusion du produit insecticide et parasiticide, dans le sac filtre à poussière de l'aspirateur, par capillarité.

Qu'il soit formulé sous forme de poudre ou de liquide, le produit parasiticide et insecticide, peut être renfermé dans un contenant non étanche, permettant sa diffusion à l'extérieur dudit contenant, lequel constitue le moyen permettant d'éviter le colmatage des parois perméables du sac à poussière de l'aspirateur.

Dans tous les cas, le complexe insecticide et parasiticide se présente sous un volume lui permettant d'être placé dans le sac de l'aspirateur, par exemple en se servant de l'orifice destiné à recevoir l'embase du tuyau de l'aspirateur.

De manière très avantageuse, le principe actif liquide peut aussi imprégner des morceaux de matière solide poreuse ou spongieuse de dimensions réduites (particules, grains, billes, etc) dont la granulométrie ou la grosseur est telle que ces particules ne puissent adhérer aux parois perméables du sac à poussière, lesdits morceaux de matière poreuse ou spongieuse ayant, par exemple, un diamètre de l'ordre de 1 mm à quelques centimètres.

On conçoit facilement maintenant que le procédé d'anéantissement des insectes et parasites présents dans une habitation, ou autres lieux ou endroits, selon l'invention consiste à disposer ledit produit dans le sac de l'aspirateur puis à effectuer l'aspiration des poussières et débris, de la manière habituelle. Selon l'invention, on ne change pas les habitudes domestiques et on traite, en effectuant le ménage quotidien, les parasites et les insectes présents dans l'habitation. A chaque changement de sac de l'aspirateur, on redispose une dose dudit produit dans le nouveau sac pour que le traitement soit ainsi renouvelé.

Le produit selon l'invention étant déposé dans le sac de recueil des salissures, les composants photosensibles dudit produit sont ainsi à l'abri de la lumière, ce qui leur permet de garder toute leur efficacité dans le temps.

## Revendications

1. Complexe insecticide et parasiticide, comprenant un produit actif, combine à un moyen autorisant son introduction et diffusion à l'intérieur du sac filtre à poussière d'un aspirateur, lequel moyen à une conformation ou une grosseur telle qu'elle s'oppose au colmatage de la paroi perméable dudit sac par ledit produit actif et/ou par ledit moyen, en cours d'utilisation dudit aspirateur, caractérisé en ce que ledit produit actif comprend au moins :
- un mélange d'agents anti-parasitaires et insecticides,
- un analogue d'hormone de croissance,
- un agent neutralisant modifiant les structures protéiniques constituant les enveloppes des corps des parasites.

2. Complexe insecticide et parasiticide, selon la revendication 1, caractérisé en ce que le mélange d'agents anti-parasitaires et insecticides comprend des pyréthrinoïdes, de préférence constitués par :
- la tétraméthrine ou perméthrine ;
- la cyperméthrine.

3. Complexe insecticide et parasiticide, suivant l'une des revendications 1 à 2, caractérisé en ce que l'analogue d'hormone de croissance est constitué par l'ovoprène, ou le methoprène, ou le ferroxycarb.

4. Complexe insecticide et parasiticide, selon l'une quelconque des revendications 1 à 3, caractérisé en ce que l'agent neutralisant, est constitué par du tanin.

5. Complexe insecticide et parasiticide, selon l'une quelconque des revendications 1 à 4, caractérisé en ce que son produit actif comprend également un synergiste, de préférence constitué par le piperonyl butoxide.

6. Complexe insecticide et parasiticide, selon l'une quelconque des revendications 1 à 5, dont le principe actif est formulé sous forme de poudre, caractérisé en ce que le moyen permettant d'éviter le colmatage du sac filtre à poussière, est constitué par des particules de matière solide mélangées à ladite poudre.

7. Complexe insecticide et parasiticide, selon l'une quelconque des revendications 1 à 5, dont le principe actif est formulé sous une forme liquide, caractérisé en ce que ledit liquide imprègne des morceaux de grosseur réduite de matière solide poreuse ou spongieuse.

8. Complexe insecticide et parasiticide, selon l'une quelconque des revendications 1 à 7, dont le principe actif est formulé sous forme de poudre ou sous une forme liquide, caractérisé en ce que ledit principe actif est renfermé dans un contenant non étanche permettant sa diffusion à l'extérieur dudit contenant.

9. Procédé de désinsectisation et de destruction d'ectoparasites par lequel on introduit le complexe insecticide et parasiticide selon l'une quelconque des revendications 1 à 8, dans le sac filtre à poussière d'un aspirateur, avant l'utilisation de ce dernier, et en ce que l'on aspire ensuite les insectes et parasites au moyen dudit aspirateur, de sorte que ces derniers sont aspirés à l'intérieur du sac, caractérisé en ce que :
- on empêche les insectes et parasites de ressortir dudit sac à filtre,
- on bloque la reproduction et le développement des insectes et parasites par l'hormone de croissance,
- on détruit lesdits insectes et parasites par l'action du principe actif dudit complexe,
- on modifie les structures protéiniques des enveloppes et des corps des parasites acariens, on neutralise ces allergènes et on supprime l'origine des allergies provoquées par les corps, mêmes morts, des parasites aspirés.

## Claims

1. An insecticidal and parasiticidal complex comprising an active substance combined with means enabling it to be inserted and diffused inside a dust filter bag of a vacuum cleaner, said means having a conformation or size such that it opposes clogging of the permeable wall of said bag by said active substance and/or by said means while said vacuum cleaner is in use, the complex being characterized in that said active substance comprises at least:
• a mixture of anti-parasite and insecticidal agents;
• an analogue of growth hormone; and
• a neutralizing agent for modifying the protein structures constituting the body envelopes of parasites.

2. An insecticidal and parasiticidal complex according to claim 1, characterized in that the mixture of anti-parasite and insecticidal agents comprises pyrethroids, preferably constituted by:
• tetramethrin or permethrin; and
• cypermethrin.

3. An insecticidal and parasiticidal complex according to claim 1 or 2, characterized in that the growth hormone analogue is constituted by ovoprene, or methoprene, or ferroxycarb.

4. An insecticidal and parasiticidal complex according to any one of claims 1 to 3, characterized in that the neutralizing agent is constituted by tanin.

5. An insecticidal and parasiticidal complex according to any one of claims 1 to 4, characterized in that its active substance also comprises a synergist, preferably constituted by piperonyl butoxide.

6. An insecticidal and parasiticidal complex according to any one of claims 1 to 5, in which the active principle is formulated in the form of a powder, characterized in that the means enabling clogging of the dust filter bag to be avoided is constituted by particles of solid matter mixed with said powder.

7. An insecticidal and parasiticidal complex according to any one of claims 1 to 5, in which the active principle is formulated in a liquid form, characterized in that said liquid impregnates small-sized pieces of porous or spongy solid material.

8. An insecticidal and parasiticidal complex according to any one of claims 1 to 7, in which the active principle is formulated in powder form or in liquid form, characterized in that said active principle is enclosed in a non-leakproof container enabling it to diffuse to the outside of said container.

9. A method of removing insects and destroying ectoparasites in which the insecticidal and parasiticidal complex according to any one of claims 1 to 8 is put into the dust filter bag of a vacuum cleaner before use thereof, and in that the insects and parasites are then sucked into said vacuum cleaner so as to be sucked into the bag, the method being characterized in that:
• the insects and parasites are prevented from getting out of said filter bag;
• reproduction and development of insects and parasites is blocked by the growth hormone;
• said insects and parasites are destroyed by the action of the active principle of said complex; and
• the protein structures of the body envelopes of acarina parasites are modified, these allergens are neutralized, and the origin of allergies provoked by the bodies of the sucked-in parasites, even when dead, is eliminated.

## Patentansprüche

1. Insekticide und parasiticide Kombination mit einem Wirkstoff, der mit einem Mittel kombiniert ist, welches sein Einbringen in einen Staubfilterbeutel eines Staubsaugers und seine Verteilung darin gestattet und dessen Form oder Teilchengröße so beschaffen ist, daß sie der Verstopfung der durchlässigen Wand des Staubfilterbeutels durch den Wirkstoff und/oder das Mittel während der Benutzung des Staubsaugers entgegenwirkt, dadurch gekennzeichnet, daß der Wirkstoff mindestens folgendes enthält:
- ein Gemisch aus antiparasitären und insekticiden Wirkstoffen,
- ein Analogon eines Wachstumshormons und
- ein Neutralisationsmittel, das die Proteinstrukturen, die die Körperhüllen von Parasiten bilden, verändert.

2. Insekticide und parasiticide Kombination nach Anspruch 1, dadurch gekennzeichnet, daß das Gemisch aus antiparasitären und insekticiden Wirkstoffen Pyrethroide enthält, die vorzugsweise aus
- Tetramethrin oder Permethrin und
- Cypermethrin
bestehen.

3. Insekticide und parasiticide Kombination nach einem der Ansprüche 1 bis 2, dadurch gekennzeichnet, daß das Analogon des Wachstumshormons aus Ovoprene, Methoprene oder Ferroxycarb besteht.

4. Insekticide und parasiticide Kombination nach einem der Ansprüche 1 bis 3, dadurch gekennzeichnet, daß das Neutralisationsmittel aus Tannin besteht.

5. Insekticide und parasiticide Kombination nach einem der Ansprüche 1 bis 4, dadurch gekennzeichnet, daß ihr Wirkstoff ferner einen Synergisten enthält, der vorzugsweise aus Piperonylbutoxid besteht.

6. Insekticide und parasiticide Kombination nach einem der Ansprüche 1 bis 5, bei der der Wirkstoff als Pulver formuliert ist, dadurch gekennzeichnet, daß das Mittel, das es gestattet, das Verstopfen des Staubfilterbeutels zu verhindern, aus Feststoffpartikeln besteht, die mit dem Pulver gemischt sind.

7. Insekticide und parasiticide Kombination nach einem der Ansprüche 1 bis 5, bei der der Wirkstoff als Flüssigkeit formuliert ist, dadurch gekennzeichnet, daß mit der Flüssigkeit kleine Stückchen eines porösen oder schwammartigen Feststoffs imprägniert sind.

8. Insekticide und parasiticide Kombination nach einem der Ansprüche 1 bis 7, bei der der Wirkstoff als Pulver oder Flüssigkeit formuliert ist, dadurch gekennzeichnet, daß der Wirkstoff in einem nicht dichten Behältnis enthalten ist, aus dem heraus er sich verteilen kann.

9. Verfahren zur Bekämpfung von Insekten und Ektoparasiten, bei dem die insekticide und parasiticide Kombination nach einem der Ansprüche 1 bis 8 in den Staubfilterbeutel eines Staubsaugers eingebracht wird, bevor dieser benutzt wird, und bei dem dann die Insekten und Parasiten mit dem Staubsauger eingesaugt werden, so daß sie ins Innere des Staubfilterbeutels gesaugt werden, dadurch gekennzeichnet, daß:
- die Insekten und Parasiten daran gehindert werden, den Staubfilterbeutel zu verlassen,
- die Vermehrung und die Entwicklung der Insekten und Parasiten durch das Wachstumshormon blockiert werden,
- die Insekten und Parasiten durch den Wirkstoff der Kombination vernichtet werden,
- die Proteinstrukturen der Hüllen und der Körper von Parasiten aus der Gruppe der Milben verändert werden, diese Allergene neutralisiert werden und die Ursache von Allergien, die von den Körpern eingesaugter, selbst toter, Parasiten verursacht werden, beseitigt wird.
